# FASCICULE DE BREVET EUROPEEN

(11) **EP 4 423 417 B1**
(45) Date de publication et mention de la délivrance du brevet: **12.08.2026**
(21) Numéro de dépôt: 22809454.6
(22) Date de dépôt: 27.10.2022
(51) Int. Cl.: F16L 33/01, F16L 11/08, F16L 33/00

(54) **EMBOUT DE CONDUITE FLEXIBLE DE TRANSPORT DE FLUIDE, CONDUITE FLEXIBLE ET PROCÉDÉ ASSOCIÉ**
ENDSTÜCK EINES SCHLAUCHS ZUM TRANSPORT VON FLUID, SCHLAUCH UND ZUGEHÖRIGES VERFAHREN
END PIECE OF A FLEXIBLE PIPE FOR TRANSPORTING FLUID, FLEXIBLE PIPE AND ASSOCIATED METHOD

(30) Priorité: 29.10.2021 FR 2111543
(43) Date de publication de la demande: 04.09.2024
(73) Titulaire: TechnipFMC Subsea France, 92400 Courbevoie (FR)
(72) Inventeur: SILVA DE VASCONCELOS, Juliana, 76000 Rouen (FR); FRIGERI, Phellip, 22620-070 Rio de Janeiro (BR); SENNEVILLE, Benjamin, 76230 Bois Guillaume (FR); RIFF, Benoît, 76170 Melamare (FR)
(74) Mandataire: Lavoix
(86) Numéro de dépôt international: PCT/EP2022/080119
(87) Numéro de publication internationale: WO 2023/073122

(56) Documents cités:
- EP-A1- 3 040 593
- WO-A1-2019/105926
- WO-A1-2019/137591
- US-B2- 6 923 477

## Description

La présente invention concerne un embout de conduite flexible de transport de fluide selon le préambule de la revendication 1. EP3040593 décrit un embout du type précité. WO2019105926 et US6923477 décrivent d'autres types d'embouts.

La conduite est en particulier une conduite flexible de type non liée (« unbonded ») destinée au transport d'hydrocarbures à travers une étendue d'eau, tel qu'un océan, une mer, un lac ou une rivière.

Une telle conduite flexible est par exemple réalisée suivant les documents normatifs API 17J, 4e édition Mai 2014 et API RP 17B, 5e édition - Mai 2014 établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant les couches formant la conduite.

La conduite est généralement disposée à travers une étendue d'eau, entre un ensemble de fond, destiné à recueillir le fluide exploité dans le fond de l'étendue d'eau et un ensemble de surface flottant destiné à collecter et à distribuer le fluide. L'ensemble de surface peut être une plateforme semi-submersible, un FPSO ou un autre ensemble flottant.

D'une manière connue, la conduite comporte une gaine de pression en polymère, destinée à contenir le fluide que transporte la conduite, éventuellement une gaine intermédiaire, et une gaine externe destinée à protéger extérieurement la conduite.

Les extrémités de la conduite présentent des embouts pour le raccordement à l'ensemble de fond et à l'ensemble de surface.

La région d'extrémité de chaque gaine est reçue dans un embout de la conduite, et est montée de manière étanche dans l'embout.

A cet effet, une solution connue pour effectuer un raccordement étanche est de sertir une bague métallique autour de la face externe de la gaine de façon à ce que la bague pénètre partiellement dans l'épaisseur de la paroi de la gaine.

La bague sertie a généralement la forme d'un cône creux entourant la gaine, ce cône étant disposé coaxialement avec la gaine. Lors du sertissage, une portée conique usinée dans le corps de l'embout est poussée axialement autour de ce cône, cette portée conique étant elle aussi coaxiale avec la gaine à sertir et au cône.

Lors de cette poussée, le cône est comprimé radialement par rapport à l'axe de la gaine, son diamètre diminue et il se déforme plastiquement en pénétrant partiellement à l'intérieur de la gaine. Cette opération de sertissage assure simultanément l'étanchéité métal/polymère entre le cône et la gaine et l'étanchéité métal/métal entre le cône et le corps de l'embout.

Cette solution résiste à des pressions internes très élevées (plus de 1000 bar) dans une large gamme de température (jusqu'à 130°C et plus). Elle est particulièrement performante lorsque la pression régnant à l'intérieur de la gaine est supérieure à la pression régnant à l'extérieur de la gaine, car cette différence de pression tend à faire augmenter le diamètre de la gaine. Ceci a pour effet d'augmenter la pression de contact entre la gaine et la bague de sertissage, ainsi que celle entre la bague de sertissage et le corps de l'embout, renforçant alors l'étanchéité du montage.

Dans le cas d'une gaine de pression, la pression interne est généralement très supérieure à la pression externe, ce qui renforce l'étanchéité, mais le gradient de pression peut parfois être inversé, par exemple lors d'un arrêt de production suivi d'une décompression.

Lorsque le gradient de pression est inversé, l'effet inverse à celui décrit plus haut se produit. Les pressions de contact entre la bague de sertissage et la gaine sont réduites et l'étanchéité du montage est diminuée. Ceci peut générer des micro-fuites dans des cas particuliers.

Dans le cas de la gaine externe, le problème est plus critique car le gradient de pression est souvent inversé en permanence, notamment lorsque l'embout est immergé à grande profondeur. Dans ce cas, la pression hydrostatique appliquée contre la face externe de la gaine externe est nettement supérieure à la pression régnant dans la paroi de la conduite qui s'applique contre la face interne de la gaine externe.

Pour pallier ces problèmes, il est connu par exemple de WO2019/137591 d'ajouter un joint d'annulaire d'étanchéité en complément de la bague sertie en polymère entre la voûte d'embout et la gaine dont l'étanchéité doit être réalisée.

Le joint annulaire peut comporter dans certains cas une région radiale externe de renfort situé radialement à l'extérieur d'un anneau élastomérique.

Une telle solution ne donne pas entière satisfaction. Dans certaines circonstances, la pression de contact s'appliquant sur la gaine en polymère n'est pas suffisamment forte pour maintenir l'étanchéité. En outre, la solution présentée dans le document précité s'applique uniquement à la gaine de pression, et n'est pas forcément adaptée aux gaines intermédiaires ou au gaines externes qui peuvent être présentes au sein de la conduite flexible.

Un but de l'invention est donc de fournir un embout de conduite flexible de transport de fluide, dans lequel l'étanchéité est améliorée entre une gaine polymère et la voûte de l'embout, quelles que soient les conditions de pression différentielle s'appliquant à la conduite, et quel que soit le type de gaine autour de laquelle l'étanchéité est réalisée dans l'embout.

A cet effet, l'invention a pour objet un embout de conduite flexible de transport de fluide selon la revendication 1.

L'embout selon l'invention peut comprendre l'une ou plusieurs des caractéristiques des revendications 2 à 12.

L'invention a également pour objet une conduite flexible selon la revendication 13.

L'invention a aussi pour objet un procédé de montage d'un embout de conduite flexible selon la revendication 14 ou 15.

L'invention sera mieux comprise à la lecture de la description qui va suivre, donnée uniquement à titre d'exemple, et faite en se référant aux dessins annexés, sur lesquels :
- [Fig 1] La figure 1 est une vue en perspective partiellement éclatée d'une première conduite flexible selon l'invention ;
- [Fig 2] La figure 2 est une vue en coupe suivant un plan axial médian des parties pertinentes de l'embout de la conduite flexible de la figure 1 illustrant un joint annulaire appliqué sur la gaine de pression ;
- [Fig 3] La figure 3 est une vue analogue à la figure 2, dans le cas d'un joint annulaire appliqué sur une gaine externe ;
- [Fig 4] La figure 4 est une vue analogue à la figure 2, dans le cas d'un joint annulaire appliqué sur une gaine intermédiaire ;
- [Fig 5] La figure 5 illustre le principe de fonctionnement du joint annulaire des figures 2 à 4 ;
- [Fig 6] La figure 6 illustre une variante de joint annulaire pouvant être mis en œuvre dans un embout selon l'invention.

Dans tout ce qui suit, les termes « extérieur » et « intérieur » s'entendent généralement de manière radiale par rapport à un axe A-A' de la conduite, le terme « extérieur » s'entendant comme relativement plus éloigné radialement de l'axe A-A' et le terme « intérieur » s'entendant comme relativement plus proche radialement de l'axe A-A' de la conduite.

Les termes « avant » et « arrière » s'entendent de manière axiale par rapport à un axe A-A' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

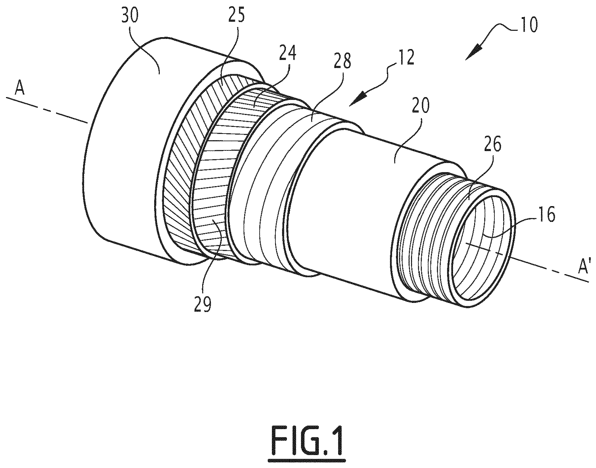

Une première conduite flexible 10 selon l'invention est illustrée partiellement par les figures 1 à 3.

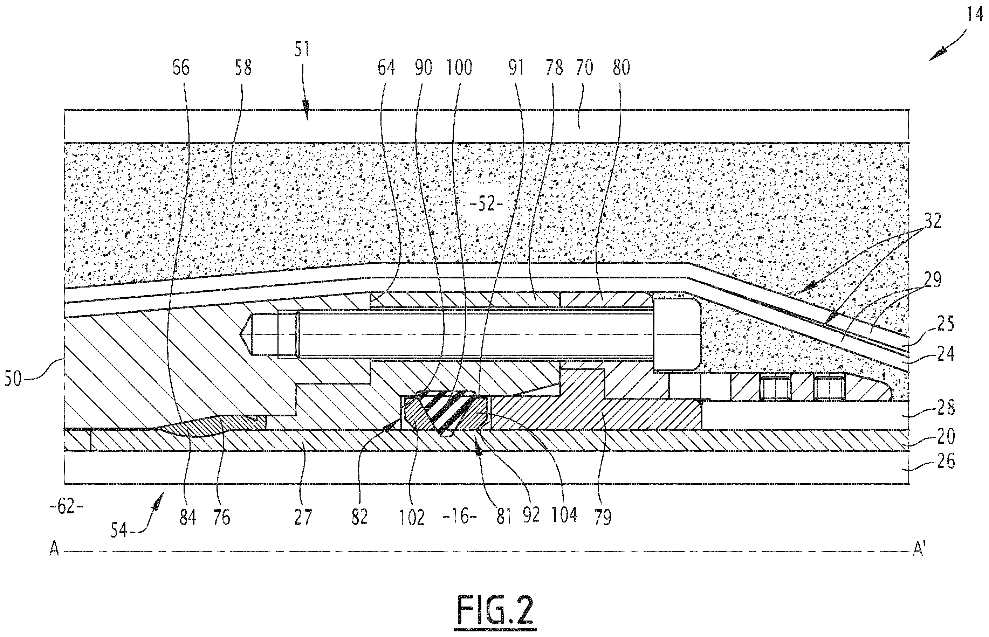

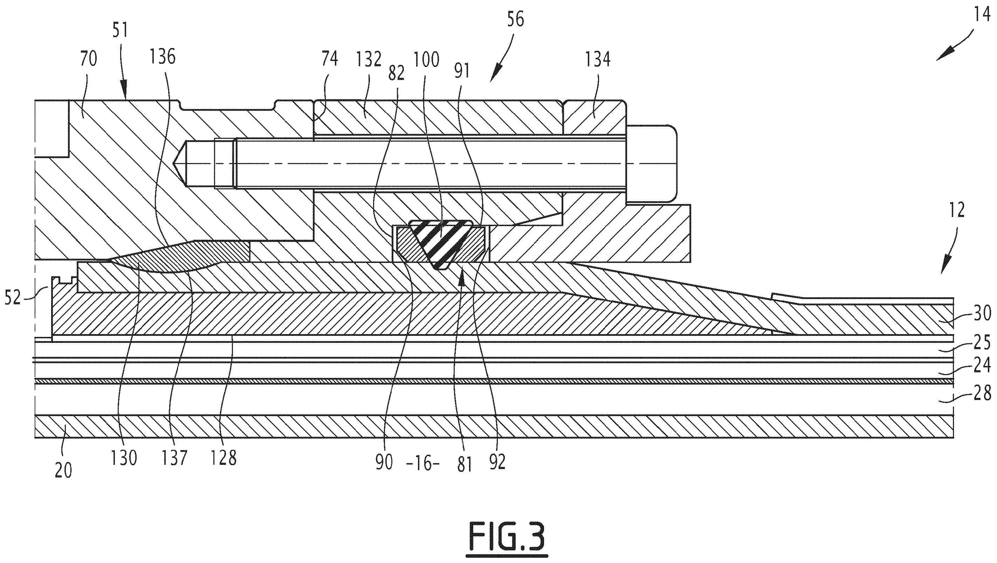

La conduite flexible 10 comporte un tronçon central 12 illustré en partie sur la figure 1. Elle comporte, à chacune des extrémités axiales du tronçon central 12, un embout d'extrémité 14 (non visible sur la Figure 1) dont les parties pertinentes sont représentées sur les figures 2 et 3.

En référence à la figure 1, la conduite 10 délimite un passage central 16 de circulation d'un fluide, avantageusement d'un fluide pétrolier. Le passage central 16 s'étend suivant un axe central A-A', entre l'extrémité amont et l'extrémité aval de la conduite 10. Il débouche à travers les embouts 14.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite. Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, 4e édition - Mai 2014 et API RP 17B, 5e édition - Mai 2014.

Comme illustré par la figure 1, la conduite 10 délimite une pluralité de couches concentriques autour de l'axe A-A', qui s'étendent continûment le long du tronçon central 12 jusqu'aux embouts 14 situés aux extrémités de la conduite.

Selon l'invention, la conduite 10 comporte au moins une première gaine en polymère constituant avantageusement une gaine de pression 20.

La conduite 10 comporte en outre des couches d'armures de traction 24, 25 disposées extérieurement par rapport à la gaine de pression 20.

Avantageusement, et selon l'utilisation souhaitée, la conduite 10 comporte en outre une carcasse interne 26 disposée à l'intérieur de la gaine de pression 20, une voûte de pression 28 intercalée entre la gaine de pression 20, éventuellement une frette, la ou les couches d'armures de traction 24, 25 et une gaine externe 30, destinée à la protection de la conduite 10.

De manière connue, la gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

En variante, la gaine tubulaire 20 est formée à base d'un polymère haute performance tel que le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone) , le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore en mélange avec le PTFE (polytétrafluoroéthylène) ou le PFPE (perfluoropolyéther).

L'épaisseur de la gaine de pression 20 est par exemple comprise entre 5 mm et 20 mm.

Comme visible sur la figure 2, la gaine de pression 20 comporte une région d'extrémité 27 disposée dans l'embout 14.

La carcasse 26, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

Dans cet exemple, la carcasse 26 est disposée à l'intérieur de la gaine de pression 20. La conduite flexible 10 est alors désignée par le terme anglais « rough bore » en raison de la géométrie de la carcasse 26.

En variante (non représentée), la conduite flexible 10 est dépourvue de carcasse interne 26, elle est alors désignée par le terme anglais « smooth bore ».

L'enroulement hélicoïdal du feuillard métallique profilé formant la carcasse 26 est à pas court, c'est-à-dire qu'il présente un angle d'hélice autour de l'axe A-A' de la conduite de valeur absolue proche de 90°, typiquement compris entre 75° et 90°.

Dans cet exemple, la voûte de pression 28 est destinée à reprendre les efforts radiaux liés à la pression régnant à l'intérieur de la gaine de pression 20. Elle est par exemple formée d'un fil profilé métallique enroulé en hélice autour de la gaine 20. Le fil profilé présente généralement une géométrie complexe, notamment en forme de Z, de T, de U, de K, de X ou de I, ce qui permet d'agrafer entre elles les spires de la voûte de pression 28. L'agrafage des spires de la voûte de pression 28 permet de maîtriser les écartements entre spires adjacentes afin notamment d'éviter le fluage de la gaine de pression 20 à travers la voûte de pression 28 sous l'effet de la pression régnant à l'intérieur de la conduite 10.

La voûte de pression 28 est enroulée en hélice à pas court autour de la gaine de pression 20, c'est-à-dire avec un angle d'hélice autour de l'axe A-A' de la conduite de valeur absolue proche de 90°, typiquement compris entre 75° et 90°.

Eventuellement, une frette non représentée sur la figure 1 entoure la voûte de pression 28. La frette est elle aussi destinée à reprendre les efforts radiaux liés à la pression, en complément de la voûte de pression 28. La frette est par exemple formée d'un fil métallique de section sensiblement rectangulaire enroulé en hélice à pas court autour de la gaine voûte de pression 28. Les spires de la frette ne sont pas agrafées entre elles.

La conduite flexible 10 selon l'invention comprend au moins une couche d'armures 24, 25 formée d'un enroulement hélicoïdal d'au moins un élément d'armure 29 allongé.

Dans l'exemple représenté sur la figure 1, la conduite flexible 10 comporte une pluralité de couches d'armures 24, 25, notamment une première couche d'armures interne 24, appliquée sur la voûte de pression 28 (ou sur la gaine 20 lorsque la voûte 28 est absente) et une deuxième couche d'armures externe 25 autour de laquelle est disposée la gaine extérieure 30.

Chaque couche d'armures 24, 25 comporte des éléments d'armure 29 longitudinaux enroulés à pas long autour de l'axe A-A' de la conduite.

Par « enroulé à pas long », on entend que la valeur absolue de l'angle d'hélice est inférieure à 60°, et est typiquement comprise entre 25° et 55°.

Les éléments d'armure 29 d'une première couche 24 sont enroulés généralement suivant un angle opposé par rapport aux éléments d'armure 29 d'une deuxième couche 25. Ainsi, si l'angle d'enroulement des éléments d'armure 29 de la première couche 24 est égal à + α, α étant compris entre 25° et 55°, l'angle d'enroulement des éléments d'armure 29 de la deuxième couche d'armures 25 disposée au contact de la première couche d'armures 24 est par exemple de - α, avec α compris entre 25° et 55°.

Les éléments d'armure 29 sont par exemple formés par des fils métalliques, ou par des rubans composites, notamment des rubans composites renforcés par des fibres de carbone.

Comme visible sur la figure 2, les éléments d'armure 29 présentent chacun un tronçon d'extrémité 32 introduit dans l'embout 14. Le tronçon d'extrémité 32 s'étend jusqu'à une extrémité libre disposée dans l'embout 14. Il présente avantageusement une trajectoire hélicoïdale ou pseudo-hélicoïdale d'axe A-A' dans l'embout 14.

La conduite flexible 10 comporte avantageusement des couches anti-usure intercalées d'une part entre la voûte de pression 28 et la première couche d'armures interne 24, et d'autre part entre les deux couches d'armures 24, 25.

Chaque couche anti-usure est formée en enroulant hélicoïdalement une bande polymérique d'épaisseur typiquement comprise entre 2 mm et 4 mm. Chaque couche anti-usure a pour fonction de réduire les frottements entre les fils métalliques ou l'usure entre les rubans composites entre lesquels elle est intercalée.

La gaine externe 30 est destinée à former une barrière étanche au liquide depuis l'extérieur de la conduite flexible vers l'intérieur. Elle est avantageusement réalisée en matériau polymère, notamment à base d'une polyoléfine, tel que du polyéthylène, à base d'un polyamide, tel que du PA11 ou du PA12, ou à base d'un polymère fluoré tel que du polyfluorure de vinylidène (PVDF).

En variante, la gaine externe 30 est formée à base d'un polymère haute performance tel que le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone) , le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore en mélange avec le PTFE (polytétrafluoroéthylène) ou le PFPE (perfluoropolyéther).

L'épaisseur de la gaine externe 30 est par exemple comprise entre 5 mm et 15 mm.

Comme illustré par la figure 2, chaque embout 14 comporte, outre la région d'extrémité 27 de la gaine de pression 20 et les tronçons d'extrémité 32 des éléments d'armure 29, une voûte d'extrémité 50 et un capot extérieur de liaison 51 faisant saillie axialement vers l'arrière à partir de la voûte d'extrémité 50. Le capot 51 délimite, avec la voûte d'extrémité 50, une chambre 52 de réception des tronçons d'extrémité 32 des éléments d'armure 29.

L'embout 14 comporte en outre un ensemble avant 54 d'étanchéité autour de la gaine de pression 20, et un ensemble arrière 56 d'étanchéité autour de la gaine extérieure 30 (visible uniquement la figure 3 qui sera décrite plus bas).

Dans cet exemple, l'embout 14 comporte en outre un matériau de remplissage solide 58, tel qu'une résine polymérique thermodurcissable de type epoxy ou araldite. Le matériau de remplissage solide est disposé dans la chambre 52 autour des tronçons d'extrémité 32.

Dans cet exemple, la voûte d'extrémité 50 est destinée à raccorder la conduite 10 à un autre embout de connexion 14 ou à des équipements terminaux, avantageusement par l'intermédiaire d'une bride d'extrémité (non représentée).

La voûte d'extrémité 50 présente un alésage central 62 destiné à recevoir la région d'extrémité 27 de la gaine de pression 20 et à permettre l'écoulement du fluide circulant à travers le passage central 16 vers l'extérieur de la conduite 10.

Dans l'exemple de la figure 2, la voûte d'extrémité 50 définit intérieurement une face arrière 64 délimitant une surface convergente 66 d'appui pour une bague de sertissage.

Le capot 51 comporte une paroi périphérique 70 tubulaire s'étendant autour de l'axe A-A'. La paroi périphérique 70 présente un bord avant (non visible) fixé sur la voûte d'extrémité 50, à l'écart radialement des couches d'armures 24, 25 et un bord arrière 74 (visible uniquement sur la figure 3) s'étendant axialement vers l'arrière au-delà de la voûte d'extrémité 50.

Le capot 51 délimite la chambre 52 radialement vers l'extérieur.

L'ensemble avant d'étanchéité 54 est avantageusement situé à l'avant de l'embout 14, en contact avec la voûte d'extrémité 50, en étant décalé axialement vers l'avant par rapport à l'ensemble arrière d'étanchéité 56.

Il comporte une bague avant de sertissage 76, destinée à venir en prise sur la gaine de pression 20, et une bride avant de serrage 78 de la bague avant de sertissage 76.

Dans l'exemple représenté sur la figure 2, dans lequel la conduite 10 comporte une voûte de pression 28, l'ensemble avant d'étanchéité 54 comporte en outre une bride 80 d'arrêt de la voûte de pression 28 et avantageusement une entretoise 79.

Selon l'invention, l'ensemble avant d'étanchéité 54 comporte en outre un joint annulaire activable d'étanchéité 81, disposé en appui sur la gaine de pression 20, le joint annulaire 81 étant reçu dans un logement annulaire 82 de l'embout 14.

La bride avant de serrage 78 est propre à être vissée sur la face arrière 64 de la voûte d'extrémité 50.

La bague avant de sertissage 76 est propre à être déplacée vers l'avant le long de l'axe A-A' en glissant sur la surface convergente 66, en étant poussée vers l'avant par la bride avant de serrage 78, lors de son montage sur la voûte d'extrémité 50. La bague avant de sertissage 76 comporte un renflement avant 84 propre à s'enfoncer radialement dans la gaine de pression 20 par effet de coin lors du déplacement de la bague avant de sertissage 76 sur la surface convergente 66.

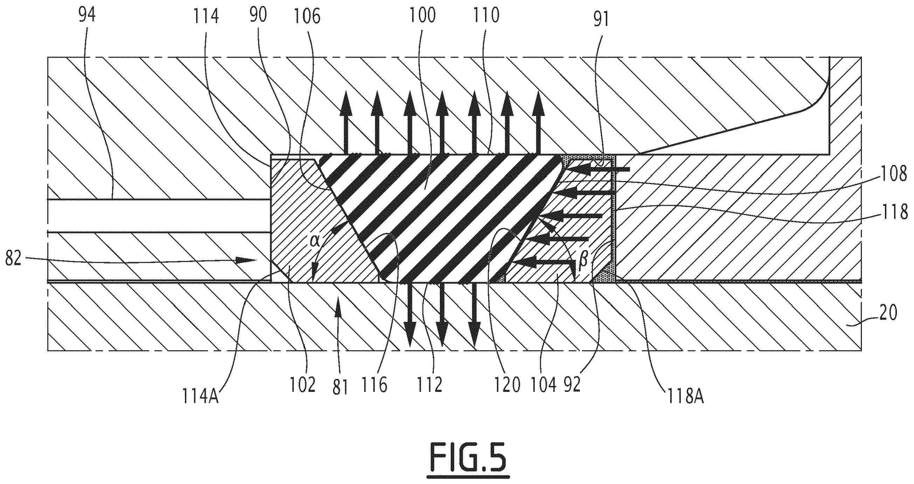

Comme visible sur les figures 2 et 5, le logement 82 est défini à l'avant par un épaulement annulaire ménagé dans la bride 78, en regard de la région d'extrémité 27 de la gaine de pression 20 disposée dans l'embout. L'épaulement définit une surface transversale 90 d'activation du joint annulaire 81, disposée à l'avant du joint annulaire 81 et une face circonférentielle intérieure 91 s'étendant autour et en regard de la gaine 20.

Le logement 82 est fermé vers l'arrière par une surface transversale de poussée 92 définie à l'avant de l'entretoise 79. Ainsi, la surface transversale de poussée 92 est propre à être rapprochée de la surface transversale d'activation 90 pour mettre en compression le joint annulaire 81. L'entretoise 79 forme ici une pièce additionnelle d'activation de la compression du joint annulaire 81, rapportée sur la voûte d'extrémité 50.

En référence à la figure 5, la voûte d'extrémité 50 et la bride avant 78 définissent avantageusement au moins un canal 94 de transmission de pression externe à la conduite flexible 10 vers le logement 82.

Le canal 94 débouche d'une part, à travers la surface transversale d'activation 90, et d'autre part, dans la chambre 52. Ainsi, la pression externe qui s'applique éventuellement dans la chambre 52 est propre à être transmise à l'espace intermédiaire situé entre la surface transversale d'activation 90 et le joint annulaire 81 à travers le canal 94.

Comme illustré par les figures 2 et 5, le joint annulaire 81 activable comporte une région centrale 100 déformable, destinée à s'interposer de manière étanche entre la gaine 20 et la face intérieure 91 délimitant le logement 82, une première région périphérique avant rigidifiée 102, disposée d'un premier côté de la région centrale 100 et une deuxième région périphérique arrière rigidifiée 104, disposée d'un autre côté de la région centrale 100. La première région périphérique 102 et la deuxième région périphérique 104 sont déplaçables l'une vers l'autre pour comprimer la région centrale 100 et provoquer l'expansion radiale de la région centrale 100 vers la gaine 20.

La région centrale 100 est formée de préférence d'un matériau déformable, tel qu'un élastomère. L'élastomère est par exemple un fluoroélastomère, tel que le fluorocarbone (FKM) fabriqué à base de fluorure de vinylidène (VDF ou VF2) choisi par exemple parmi un copolymère de l'hexafluoropolyropylène (HFP) et du VF2, un terpolymère du tétrafluoroéthylène (ou « TFE »), du HFP, et du VF2, un terpolymère du TFE, du perfluorométhylvinyléther (ou « PMVE ») et du VF2), un terpolymère du TFE, du propylène et du VF2 ou un pentapolymère du TFE, HFP, de l'éthylène, du PMVE et du VF2.

En variante, le fluoroélastomère est un perfluoroélastomère (FFKM) par exemple un terpolymère du TFE, du PMVE et d'un troisième monomère permettant la réticulation. En variante encore, le fluoroélastomère est un fluorosilicone (FVMQ) ou un copolymère de propylène tétrafluoroéthylène (FEPM).

En variante ou en complément, la région centrale 100 est réalisée en un caoutchouc nitrile, en particulier un copolymère butadiène acrylonitrile (NBR) ou/et un copolymère butadiène acrylonitrile hydrogéné (HNBR).

Dans cet exemple, la région centrale 100 présente une section en forme de trapèze s'effilant depuis l'extérieur vers l'intérieur entre la face intérieure 91 du logement 82 et la gaine de pression 20, la section étant prise dans chaque plan axial médian passant par l'axe A-A'.

En référence à la figure 5, la région centrale 100 comporte une première surface inclinée avant 106, une deuxième surface inclinée arrière 108, et une surface circonférentielle extérieure 110 raccordant les premières surfaces inclinées 106 et 108.

Elle comporte en outre une pointe 112 intérieure, destinée à s'appliquer sur la gaine 20.

La première surface 106 est inclinée vers l'arrière, en se déplaçant de l'avant vers l'arrière. Elle converge vers la pointe intérieure 112. La deuxième surface inclinée 108 est inclinée vers l'avant en se déplaçant de l'arrière vers l'avant. Elle converge également vers la pointe 112.

Ainsi, la largeur de la région centrale 100, prise le long de l'axe A-A' au niveau de la pointe intérieure 112 est inférieure à la largeur de la région centrale 100, prise le long de l'axe A-A' au niveau de la surface circonférentielle extérieure 110.

De préférence, la dureté du matériau formant la région centrale 100 est inférieure à 100 Shore A notamment entre 60 Shore A et 90 Shore A

La région centrale 100 est ainsi plus déformable que les régions périphériques 102, 104, autorisant son expansion radiale vers la gaine 20 et sa compression sur la gaine 20.

La première région périphérique avant 102 présente une section en forme de coin prise dans chaque plan axial médian passant par l'axe A-A. Elle présente ainsi une première surface latérale avant 114, perpendiculaire à l'axe A-A', destinée à s'étendre en regard de la surface transversale d'activation 90 et une première surface inclinée complémentaire 116, située à l'arrière, appliquée sur la première surface inclinée avant 106 de la région centrale 100.

L'angle α d'inclinaison de la première surface inclinée avant 106, et de la première surface inclinée complémentaire 116 est par exemple compris entre 40 ° et 80° par rapport à l'axe A-A'.

La première surface latérale avant 114 est avantageusement prolongée vers la gaine 20 par un chanfrein avant 114A situé en regard de la gaine 20.

La deuxième région périphérique 104 présente une deuxième surface latérale arrière 118, perpendiculaire à l'axe A-A', destinée à s'étendre en regard de la surface transversale de poussée 92, et une deuxième surface inclinée complémentaire 120, située à l'avant, appliquée contre la deuxième surface inclinée arrière 108 de la région centrale 100.

L'angle β d'inclinaison de la deuxième surface inclinée arrière 108 et de la deuxième surface inclinée complémentaire 116 par rapport à l'axe A-A' est par exemple compris entre 40° et 80°. L'angle β est de préférence égal à l'angle α.

La deuxième surface latérale arrière 118 est avantageusement prolongée vers la gaine 20 par un chanfrein arrière 118A situé en regard de la gaine 20.

La première région périphérique avant 102 et la deuxième région périphérique arrière 104 sont chacune formée d'un matériau plus rigide que la région centrale, par exemple un polymère thermoplastique.

Elle est par exemple réalisée en PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), ou en un polymère fluoré, tel que du polytétrafluorure d'éthylène (PTFE).

De préférence, la dureté du matériau formant chaque région périphérique 102, 104 est supérieure à celle de la région centrale 100. Cette dureté est par exemple supérieure à 65 shore D.

La région périphérique 102, 104 est par exemple réalisée en PTFE ou en PEEK .

Ainsi, sous l'effet d'une force de poussée vers l'arrière s'appliquant sur la première région périphérique 102 au niveau de la première surface latérale avant 114 ou/et d'une force de poussée vers l'avant s'appliquant sur la deuxième région périphérique 104, au niveau de la deuxième surface latérale 118, la première région périphérique 102 et la deuxième région périphérique 104 sont propres à se rapprocher l'une de l'autre pour comprimer la région centrale 100 entre les surfaces inclinées complémentaires 116, 120. Ceci provoque l'expansion radiale de la pointe intérieure 112 vers la gaine 20, et l'application de la surface circonférentielle 110 sur la face intérieure 91 du logement 82.

Le joint annulaire 81 passe ainsi d'une configuration de repos à une première configuration active d'étanchéité, en compression, dans laquelle il réalise une étanchéité entre la gaine 20 et la bride avant de serrage 78 lors du montage de l'embout 14.

Cette étanchéité est renforcée lorsque la pression augmente dans l'annulaire entre la gaine externe 30 et la gaine de pression 20, tendant à pousser la deuxième région périphérique 104 vers la première région périphérique 102.

D'une manière connue, comme illustré par la figure 3, l'ensemble arrière d'étanchéité 56 comporte une bague arrière de sertissage 130, une bride arrière de serrage 132 de la bague arrière de sertissage 130, et une bride arrière de compression 134.

L'ensemble arrière d'étanchéité 56 comporte avantageusement une canule intermédiaire d'appui 128 interposée entre la gaine externe 30 et les couches d'armures 24, 25, la gaine externe 30 reposant sur la canule intermédiaire 128.

Avantageusement, dans le mode de réalisation de la figure 3, l'ensemble arrière d'étanchéité 56 comporte en outre un joint annulaire activable 81 externe disposé dans un logement 82 externe.

La bague arrière de sertissage 130 est interposée entre une surface inclinée arrière 136 du capot 51 et la gaine externe 30. Elle présente un renflement avant 137 propre à s'enfoncer radialement dans la gaine externe 30 par effet de coin lors du déplacement de la bague arrière de sertissage 130 sur la surface 136.

La bride arrière de serrage 132 est fixée sur le bord arrière 74 du capot 51. Elle pousse vers l'avant la bague arrière de sertissage 130 pour la déplacer radialement vers l'axe A-A' et sertir la gaine externe 30.

La gaine externe 30 s'appuie sur la canule intermédiaire 128. Elle est calée axialement à l'arrière de l'ensemble de fixation 56.

Le logement 82 externe de l'ensemble arrière d'étanchéité 56 est de structure analogue au logement 82 défini pour l'ensemble avant d'étanchéité 54.

Il est défini par un épaulement annulaire ménagé dans la bride arrière de serrage 132, en regard d'une région d'extrémité de la gaine externe 30 disposée dans l'embout 14. Comme précédemment, l'épaulement définit une première surface transversale 90 d'activation du joint annulaire 81, disposée à l'avant du joint annulaire 81 et une face circonférentielle intérieure 91 s'étendant autour et en regard de la gaine 30.

Le logement 82 est fermé vers l'arrière par une surface transversale de poussée 92 définie à l'avant de la bride arrière de compression 134. Ainsi, la surface transversale de poussée 92 est propre à être rapprochée de la surface transversale d'activation 90 pour mettre en compression le joint annulaire 81 comme décrit plus haut. La bride arrière de compression 134 forme ainsi une pièce additionnelle d'activation de la compression du joint annulaire 81, rapportée sur le capot 51.

Le joint annulaire 81 de l'ensemble arrière d'étanchéité 56 est de structure identique au joint annulaire 81 de l'ensemble avant d'étanchéité 54.

Le montage de l'embout 14 va maintenant être décrit.

Initialement, la voûte d'extrémité 50 est mise en place autour de la région d'extrémité 27 de la gaine de pression 20, les couches d'armures 24, 25 ayant été déplacées radialement vers l'extérieur.

La bague de sertissage 76 est mise en place entre la gaine de pression 20 et la surface convergente 66 de la voûte d'extrémité 50.

La bride de serrage 78 est ensuite mise en place pour être serrée contre la face arrière 64 de la voûte d'extrémité 50. Ensuite, le joint annulaire activable 81 dans sa configuration de repos est mis en place dans le logement 82. Le logement 82 est alors fermé par l'insertion de l'entretoise 79.

Puis, la bride de serrage 78 et l'entretoise 79 sont serrées contre la voûte d'extrémité 50, provoquant le déplacement de la surface transversale de poussée 92 vers la surface transversale d'activation 90, et la compression de la région centrale 100 du joint activable entre les régions périphériques 102, 104. Ceci provoque l'application et la compression de la pointe intérieure 112 contre la gaine 20.

De manière similaire, la canule 128 est introduite entre les éléments d'armure 24, 25 et la gaine externe 30.

Le capot 51 est mis en place autour de la conduite 10 de manière à former avec la voûte d'extrémité 50, la chambre 52. La bague arrière de sertissage 130 est ensuite mise en place entre le capot 51 et la gaine externe 30. La bride arrière de serrage 132 est alors mise en place, pour délimiter le logement 82 externe, puis le joint annulaire 81 est introduit dans le logement 82 externe.

Ensuite, la bride de compression 134 est montée à l'arrière de la bride de serrage 132. La bride arrière de serrage 132 est alors serrée contre le bord arrière 74 du capot 51. La bride de compression 134 se rapproche de la bride arrière de serrage 132, provoquant la compression de la région centrale 100 du joint annulaire 81 externe entre la première région périphérique 102 et la deuxième région périphérique 104, et l'application de la pointe intérieure 112 contre la gaine externe 30.

Avantageusement, lors du montage, l'étanchéité assurée par le joint annulaire 81 peut être testée en introduisant une pression à travers le canal 94, suivant une adaptation de la méthode décrite dans US 6 923 477, afin d'assurer qu'en cas de défaillance de l'étanchéité entre la bague avant de sertissage 76 et la gaine de pression 20, le joint annulaire 81 est apte à assurer l'étanchéité entre la voûte d'extrémité 50 et la gaine de pression 20.

En utilisation, lors d'une surpression éventuelle à l'extérieur de la conduite flexible 10 par rapport à l'intérieur de la conduite flexible 10, même si l'intégrité du sertissage de la bague avant de sertissage 76 par rapport à la région d'extrémité 27 de la gaine de pression 20 fait défaut, le joint annulaire 81 maintient l'étanchéité autour de la gaine de pression 20. Cette étanchéité est même renforcée, puisque la surpression transmise au joint annulaire 81 à travers le canal 94 provoque une compression supplémentaire de la région centrale 100 au-delà de la compression primaire résultant du montage du joint annulaire 81.

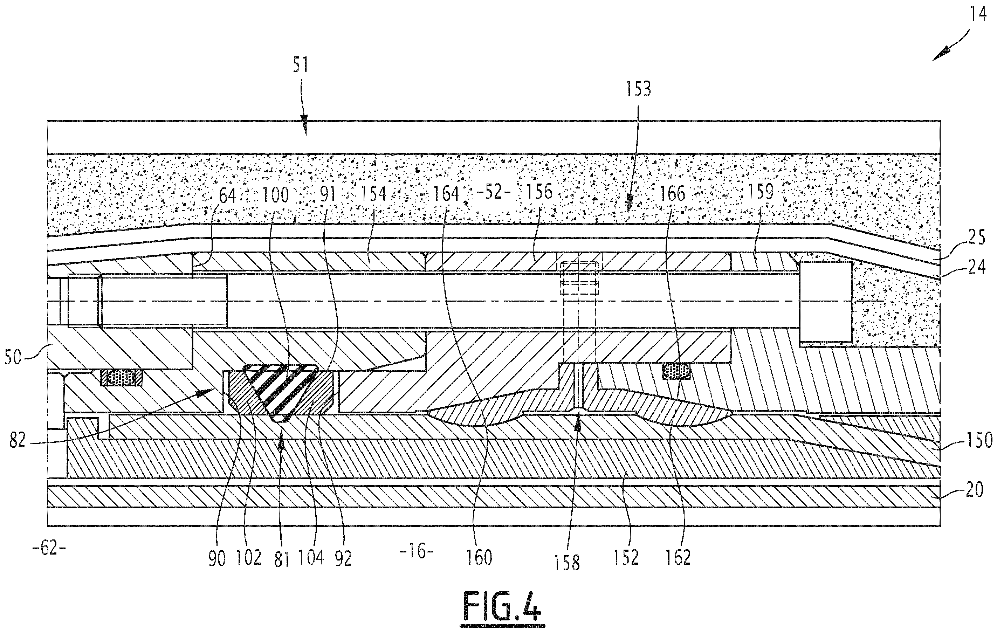

Dans la variante représentée sur la figure 4, la conduite flexible 10 comprend en outre une gaine intermédiaire 150 disposée dans l'annulaire entre la gaine de pression 20 et la gaine externe 30. L'embout comprend en outre une canule 152 intermédiaire sur laquelle repose la gaine intermédiaire 150.

La canule intermédiaire 152 est avantageusement munie d'un passage interne de circulation des gaz.

L'embout 14 comprend un ensemble intermédiaire d'étanchéité 153 comportant une première bride intermédiaire 154 de logement, montée sur la voûte d'extrémité 50 au niveau de la face arrière 64 et une deuxième bride intermédiaire de compression 156 montée sur la première bride intermédiaire 154. L'ensemble intermédiaire d'étanchéité 153 comporte en outre une bague intermédiaire 158 de sertissage de la gaine intermédiaire 150 et une bride de serrage 159 montée à l'arrière des brides 154, 156.

Avantageusement, dans le mode de réalisation de la figure 4, l'ensemble intermédiaire d'étanchéité 153 comporte en outre un joint annulaire activable 81 intermédiaire disposé dans un logement 82 intermédiaire ménagé entre la première bride intermédiaire 154 et la deuxième bride intermédiaire 156.

La bague intermédiaire de sertissage 158 comporte deux renflements opposés, un renflement avant 160 et un renflement arrière 162, chacun destiné à s'insérer dans la gaine intermédiaire 150.

La bague intermédiaire de sertissage 158 est interposée à l'avant, entre une surface inclinée arrière 164 de la bride intermédiaire de sertissage 156 et la gaine intermédiaire 150 et à l'arrière, entre une surface inclinée avant 166 de la bride intermédiaire de serrage 159 et la gaine intermédiaire 150.

Ceci provoque le sertissage du renflement avant 160 et du renflement arrière 162 dans la gaine intermédiaire 150.

La bride intermédiaire de logement 154, la bride intermédiaire de sertissage 156 et la bride intermédiaire de serrage 159 sont appliquées l'une sur l'autre et sont fixées conjointement sur la face arrière 64 de la voûte d'extrémité 50.

La gaine intermédiaire 150 s'appuie sur la canule intermédiaire 152.

Le logement intermédiaire 82 de l'ensemble intermédiaire d'étanchéité 153 est de structure analogue au logement 82 défini pour l'ensemble avant d'étanchéité 54. Il est situé à l'avant de la bague intermédiaire de sertissage 158.

Le logement intermédiaire 82 est défini par un épaulement annulaire ménagé dans la bride intermédiaire de logement 154, en regard d'une région d'extrémité de la gaine intermédiaire 150 disposée dans l'embout 14. Comme précédemment, l'épaulement définit une première surface transversale 90 d'activation du joint annulaire 81, disposée à l'avant du joint annulaire 81 et une face circonférentielle intérieure 91 s'étendant autour et en regard de la gaine intermédiaire 150.

Le logement 82 est fermé vers l'arrière par une surface transversale de poussée 92 définie à l'avant de la bride intermédiaire de compression 156. Ainsi, la surface transversale de poussée 92 est propre à être rapprochée de la surface transversale d'activation 90 pour mettre en compression le joint annulaire 81, comme décrit plus haut.

La bride intermédiaire de compression 156 forme ainsi une pièce additionnelle d'activation de la compression du joint annulaire 81, rapportée sur la voûte d'extrémité 50.

Le joint annulaire 81 de l'ensemble intermédiaire d'étanchéité 153 est de structure identique au joint annulaire 81 de l'ensemble avant d'étanchéité 54. Il assure une étanchéité efficace entre la gaine intermédiaire 150 et les brides intermédiaires 154, 156, même si l'étanchéité n'est pas maintenue par la bague intermédiaire de sertissage 158.

Dans une variante s'appliquant à chacun des modes de réalisation représentés sur les figures 2 à 4, la première région périphérique 102 et la deuxième région périphérique 104 sont formées chacune par un anneau rigidifié 180 noyé dans le matériau déformable formant la région centrale 100. L'anneau rigidifié 180 est par exemple un fil ressort, un jonc ou encore une corde.

L'anneau rigidifié 180 est par exemple formé de métal, d'un alliage de métal ou d'un matériau plus rigide que la région centrale 100, par exemple un polymère thermoplastique, notamment de fibres.

L'alliage de métal est par exemple du phosphore bronze. Les fibres sont par exemple des fibres artificielles synthétiques en polyester.

Le matériau plus rigide est par exemple réalisé en PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), ou en un polymère fluoré, tel que du polytétrafluorure d'éthylène (PTFE). Le polymère thermoplastique peut être chargé en fibres telles que des fibres de carbone.

En variante, l'anneau rigidifié 180 est réalisé d'une combinaison de métal et de polymère thermoplastique, par exemple disposés de manière coaxiale. En particulier, l'anneau rigidifié 180 comprend des ressorts à spires coaxiaux, avantageusement un ressort à spire interne en métal, notamment en acier inoxydable et un ressort externe en polymère, notamment en PEEK (polyétheréthercétone).

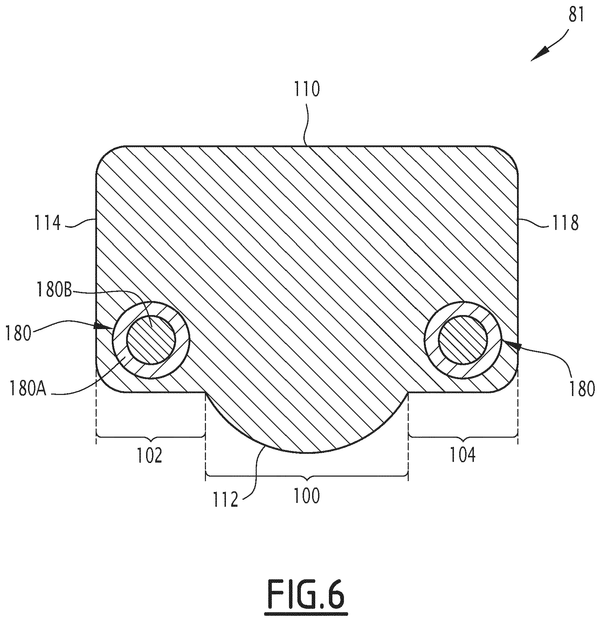

En variante, comme illustré sur la figure 6, l'anneau rigidifié 180 est une combinaison d'un fil ressort 180A et d'un jonc 180B, le jonc 180B étant disposé à l'intérieur du fil ressort 180A.

Dans cet exemple, l'anneau rigidifié 180 est disposé au voisinage d'une surface intérieure du joint annulaire 81 destinée à s'appliquer sur la gaine 20, 30, 150 de part et d'autre de la pointe 112. La pointe 112 est ici saillante au repos. Elle présente un contour arrondi.

Le fonctionnement du joint annulaire 81 décrit sur la figure 6 est par ailleurs analogue à celui décrit sur la figure 5.

## Revendications

1. Embout (14) de conduite flexible (10) de transport de fluide, comprenant :
- au moins une région d'extrémité d'une gaine en polymère (20 ; 30 ; 150) de la conduite flexible (10) ;
- des tronçons d'extrémité d'éléments d'armure (29) de la conduite flexible (10) disposés autour de ou dans la région d'extrémité de la gaine en polymère (20 ; 30 ; 150) ;
- une voûte d'extrémité (50) définissant un alésage central de circulation de fluide s'étendant suivant un axe central (A-A'),
- un capot (51) définissant avec la voûte d'extrémité (50), une chambre (52) de réception des tronçons d'extrémité d'éléments d'armure (29) ;
- un joint annulaire (81) d'étanchéité, disposé au contact de la gaine en polymère (20 ; 30 ; 150) à l'écart de la bague de sertissage (76 ; 130 ; 158) ; le joint annulaire (81) comportant une région centrale (100) annulaire déformable radialement vers la gaine en polymère (20 ; 30 ; 150), **caractérisé en ce que** le joint annulaire (81) comporte deux régions périphériques annulaires rigidifiées (102 ,104), plus rigides que la région centrale (100), situées de part et d'autre de la région centrale (100) suivant l'axe central (A-A'), les régions annulaires périphériques (102, 104) étant déplaçables l'une vers l'autre pour activer la déformation radiale de la région centrale (100) vers la gaine en polymère (20 ; 30 ; 150) depuis une configuration de repos vers une configuration active d'étanchéité autour de la gaine en polymère (20 ; 30 ; 150), l'embout comprenant au moins un ensemble d'étanchéité (54 ; 56 ; 153) comprenant au moins une bague de sertissage (76 ; 130 ; 158), la bague de sertissage (76 ; 130 ; 158) comprenant au moins un renflement (84, 160, 162) inséré radialement dans la gaine en polymère (20 ; 30 ; 150).

2. Embout (14) selon la revendication 1, dans lequel au moins dans la position active, la région centrale (100) définit une pointe radiale (112) faisant saillie vers la gaine en polymère (20 ; 30 ; 150) au-delà de chaque région annulaire périphérique (102, 104).

3. Embout (14) selon la revendication 2, dans lequel dans la configuration de repos, la région centrale (100) présente la pointe radiale (112).

4. Embout (14) selon l'une quelconque des revendications précédentes, dans lequel la région centrale (100) est réalisée à base d'élastomère, notamment à base d'un élastomère fluoré tel que le FKM, le FFKM ou le FVMQ, ou d'un élastomère nitrile tel que le NBR ou le HNBR, chaque région périphérique (102, 104) étant réalisée à base de métal, ou d'un polymère plus rigide que l'élastomère, notamment à base de PEK, de PEEK, de PEEKK, de PEKK, de PEKEKK, ou à base d'un polymère fluoré, tel que du polytétrafluorure d'éthylène (PTFE).

5. Embout (14) selon l'une quelconque des revendications précédentes, définissant un logement (82) de réception du joint annulaire (81), le logement (82) étant délimité par une surface transversale d'activation (90) du joint annulaire (81), située sur la voûte d'extrémité (50) ou sur une pièce fixée par rapport à la voûte d'extrémité (50), la surface transversale d'activation (90) s'étendant en regard de la première région périphérique (102), le logement (82) étant également délimité par une surface transversale de poussée (92) du joint annulaire (81), située en regard de la surface transversale d'activation (90), sur une pièce additionnelle d'activation de la compression du joint annulaire (81), la surface transversale de poussée (92) s'étendant en regard de la deuxième région périphérique (102), la surface transversale d'activation (90) et la surface transversale de poussée (92) étant mobiles l'une par rapport à l'autre au moins lors du montage de l'embout (14) pour passer le joint annulaire (81) de sa configuration de repos à sa configuration active.

6. Embout (14) selon la revendication 5, dans lequel la pièce additionnelle est fixée sur la bague de sertissage (76 ; 130 ; 158).

7. Embout (14) selon quelconque des revendications 5 ou 6, définissant un canal (94) de transmission d'une pression externe à la conduite flexible (10), débouchant dans le logement (82) entre la surface transversale d'activation (90) et la première région périphérique (102).

8. Embout (14) selon l'une quelconque des revendications précédentes, dans lequel la première région périphérique (102) et/ou la deuxième région périphérique (104) sont rapportées sur des surfaces (106, 108) de la région centrale (100).

9. Embout (14) selon la revendication 8, dans laquelle la région centrale (100) présente une première surface inclinée (106) d'un angle non nul par rapport à un plan perpendiculaire à l'axe central (A-A'), la première région périphérique (102) présentant une première surface inclinée complémentaire (116), rapportée sur la première surface inclinée (106), l'inclinaison de la première surface inclinée (106) étant dirigée vers la deuxième région périphérique (104) en se déplaçant radialement vers l'axe central (A-A') sur la première surface inclinée (106).

10. Embout (14) selon la revendication 9, dans lequel la région centrale (100) présente une deuxième surface inclinée (108) d'un angle non nul par rapport à un plan perpendiculaire à l'axe central (A-A'), la deuxième surface inclinée (108) étant située à l'opposé de la première surface inclinée (106) le long de l'axe central (A-A'), la deuxième région périphérique (104) présentant une deuxième surface inclinée complémentaire (120) rapportée sur la deuxième surface inclinée (108), la région centrale (100) présentant avantageusement une section en forme de trapèze.

11. Embout (14) selon l'une quelconque des revendications 1 à 7, dans laquelle la première région périphérique (102) et la deuxième région périphérique (104) présentent chacune un organe annulaire continu ou discontinu (180) noyé dans le matériau formant la région centrale (100).

12. Embout (14) selon l'une quelconque des revendications précédentes, dans laquelle la région d'extrémité de la gaine (20 ; 30 ; 150) est une région d'extrémité d'une gaine de pression (20) de la conduite flexible (10) définissant un passage intérieur de circulation de fluide, une région d'extrémité d'une gaine externe (30) de la conduite flexible (10) définissant une surface extérieure de la conduite flexible (10) ou/et une région d'extrémité d'une gaine intermédiaire (150) située dans un espace annulaire entre la gaine de pression (20) et la gaine externe (30).

13. Conduite flexible (10), comprenant un tronçon central (12) comportant au moins une gaine en polymère (20 ; 30 ; 150) et des éléments d'armure (29) disposés autour ou à l'intérieur de la gaine en polymère (20 ; 30 ; 150), la conduite flexible (10) comprenant au moins un embout (14) selon l'une quelconque des revendications précédentes, monté à une extrémité du tronçon central (12).

14. Procédé de montage d'un embout (14) de conduite flexible (10), comportant les étapes suivantes :
- fourniture d'une région d'extrémité d'une gaine en polymère (20 ; 30 ; 150) de la conduite flexible (10) et de tronçons d'extrémité d'éléments d'armure (29) de la conduite flexible (10) disposés autour ou dans la région d'extrémité de la gaine en polymère (20 ; 30 ; 150);
- mise en place d'une voûte d'extrémité (50) définissant un alésage central de circulation de fluide suivant un axe central (A-A'), et d'un capot (51) définissant avec la voûte d'extrémité (50), une chambre (52) de réception des tronçons d'extrémité d'éléments d'armure (29) ;
- montage d'au moins un ensemble d'étanchéité (54 ; 56 ; 153) comprenant au moins une bague de sertissage (76 ; 130 ; 158) comprenant au moins un renflement (84, 160, 162) inséré radialement dans la gaine en polymère (20 ; 30 ; 150) ;
- placement d'un joint annulaire (81) au contact de la gaine en polymère (20 ; 30 ; 150) à l'écart de la bague de sertissage (76 ; 130 ; 158) ;
**caractérisé en ce que** le joint annulaire (81) comporte une région centrale (100) annulaire déformable radialement vers la gaine en polymère (20 ; 30 ; 150), et deux régions périphériques annulaires rigidifiées (102 ,104), plus rigides que la région centrale (100), situées de part et d'autre axialement de la région centrale (100), le procédé comprenant le déplacement des régions annulaires périphériques (102, 104) l'une vers l'autre pour activer une déformation radiale de la région centrale (100) vers la gaine en polymère (20 ; 30 ; 150) depuis une configuration de repos, vers une configuration active d'étanchéité autour de la gaine en polymère (20 ; 30 ; 150).

15. Procédé selon la revendication 14, dans lequel l'embout (14) définit un logement (82) de réception du joint annulaire (81), le logement (82) étant délimité par une surface transversale d'activation (90) du joint annulaire (81), située sur la voûte d'extrémité (50) ou sur une pièce fixée par rapport à la voûte d'extrémité (50), la surface transversale d'activation (90) s'étendant en regard de la première région périphérique (102), le logement étant également délimité par une surface transversale de poussée (92) du joint annulaire (81), située en regard de la surface transversale d'activation (90), sur une pièce additionnelle d'activation de la compression du joint annulaire (81), s'étendant en regard de la deuxième région périphérique (104), le déplacement des régions annulaires périphériques (102, 104) l'une vers l'autre comprenant le mouvement relatif de la surface transversale d'activation (90) et de la surface transversale de poussée (92) l'une par rapport à l'autre pour passer le joint annulaire (81) de sa configuration de repos à sa configuration active, le procédé comprenant optionnellement la transmission d'une pression externe à la conduite flexible (10) jusqu'à un interstice entre la surface transversale d'activation (90) et la première région périphérique (102) pour rapprocher encore la première région périphérique (102) de la deuxième région périphérique (104).

## Patentansprüche

1. Endstück (14) einer flexiblen Leitung (10) zum Transport von Fluid, umfassend:
- mindestens einen Endbereich einer Polymerhülle (20; 30; 150) der flexiblen Leitung (10);
- Endabschnitte von Bewehrungselementen (29) der flexiblen Leitung (10), die um den oder in dem Endbereich der Polymerhülle (20; 30; 150) angeordnet sind;
- eine Endwölbung (50), die eine mittlere Fluidzirkulationsbohrung definiert, die sich entlang einer Mittelachse (A-A') erstreckt,
- eine Haube (51), die mit der Endwölbung (50) eine Kammer (52) zum Aufnehmen der Endabschnitte der Bewehrungselemente (29) definiert;
- eine ringförmige Dichtung (81), die in Kontakt mit der Polymerhülle (20; 30; 150) beabstandet von dem Klemmring (76; 130; 158) angeordnet ist; wobei die ringförmige Dichtung (81) einen ringförmigen mittleren Bereich (100) aufweist, der radial zu der Polymerhülle (20; 30; 150) hin verformbar ist, **dadurch gekennzeichnet, dass** die ringförmige Dichtung (81) zwei versteifte ringförmige Umfangsbereiche (102, 104) aufweist, die steifer als der mittlere Bereich (100) sind und sich auf beiden Seiten des mittleren Bereichs (100) entlang der Mittelachse (A-A') befinden, die peripheren ringförmigen Bereiche (102, 104) gegeneinander verschiebbar sind, um die radiale Verformung des mittleren Bereichs (100) zu der Polymerhülle (20; 30; 150) hin von einer Ruhekonfiguration in eine aktive Dichtungskonfiguration um die Polymerhülle (20; 30; 150) zu aktivieren, das Endstück umfassend mindestens eine Dichtungsanordnung (54; 56; 153), umfassend mindestens einem Klemmring (76; 130; 158), der Klemmring (76; 130; 158) mindestens umfassend eine Ausbuchtung (84, 160, 162), die radial in die Polymerhülle (20; 30; 150) eingesetzt ist.

2. Endstück (14) nach Anspruch 1, wobei der mittlere Bereich (100) zumindest in der aktiven Position eine radiale Spitze (112) definiert, die zu der Polymerhülle (20; 30; 150) hin über jeden ringförmigen Umfangsbereich (102, 104) hinaus hervorsteht.

3. Endstück (14) nach Anspruch 2, wobei der mittlere Bereich (100) in der Ruhekonfiguration die radiale Spitze (112) aufweist.

4. Endstück (14) nach einem der vorherigen Ansprüche, wobei der mittlere Bereich (100) auf Elastomerbasis gefertigt ist, insbesondere auf der Basis eines Fluorelastomers, wie beispielsweise FKM, FFKM oder FVMQ, oder eines Nitrilelastomers, wie beispielsweise NBR oder HNBR, wobei jeder Umfangsbereich (102, 104) auf Metallbasis oder aus einem Polymer gefertigt ist, das steifer ist als das Elastomer, insbesondere auf Basis von PEK, PEEK, PEEKK, PEKK, PEKEKK, oder auf Basis eines fluorierten Polymers, wie beispielsweise Polyethylentetrafluorid (PTFE).

5. Endstück (14) nach einem der vorherigen Ansprüche, das eine Aufnahme (82) zum Aufnehmen der ringförmigen Dichtung (81) definiert, wobei die Aufnahme (82) durch eine Aktivierungsquerschnittsfläche (90) der ringförmigen Dichtung (81) begrenzt ist, die sich an der Endwölbung (50) oder an einem Teil befindet, das in Bezug auf die Endwölbung (50) fixiert ist, sich die Aktivierungsquerschnittsfläche (90) in Bezug auf den ersten Umfangsbereich (102) erstreckt, die Aufnahme (82) auch durch eine transversale Druckfläche (92) der ringförmigen Dichtung (81), die sich gegenüber der transversalen Aktivierungsfläche (90) befindet, auf einem zusätzlichen Aktivierungsteil für die Kompression der ringförmigen Dichtung (81) begrenzt ist, sich die transversale Druckfläche (92) gegenüber dem zweiten Umfangsbereich (102) erstreckt, wobei die Aktivierungsquerschnittsfläche (90) und die transversale Druckfläche (92) zumindest bei der Montage der Spitze (14) in Bezug aufeinander bewegbar sind, um die ringförmige Dichtung (81) von ihrer Ruhekonfiguration in ihre aktive Konfiguration zu überführen.

6. Endstück (14) nach Anspruch 5, wobei das zusätzliche Teil an dem Klemmring (76; 130; 158) fixiert ist.

7. Endstück (14) nach einem der Ansprüche 5 oder 6, der einen Kanal (94) zur Übertragung eines externen Drucks auf die flexible Leitung (10) definiert, der in die Aufnahme (82) zwischen der Aktivierungsquerschnittsfläche (90) und dem ersten Umfangsbereich (102) mündet.

8. Endstück (14) nach einem der vorherigen Ansprüche, wobei der erste Umfangsbereich (102) und/oder der zweite Umfangsbereich (104) auf Oberflächen (106, 108) des mittleren Bereichs (100) angesetzt sind.

9. Endstück (14) nach Anspruch 8, wobei der mittlere Bereich (100) eine erste geneigte Oberfläche (106) mit einem Winkel ungleich Null in Bezug auf eine Ebene senkrecht zu der Mittelachse (A-A') aufweist, der erste Umfangsbereich (102) eine komplementäre erste geneigte Fläche (116) aufweist, die an die erste geneigte Fläche (106) angesetzt ist, wobei die Neigung der ersten geneigten Oberfläche (106) auf den zweiten Umfangsbereich (104) gerichtet ist, indem sie sich radial zu der Mittelachse (A-A') auf der ersten geneigten Oberfläche (106) bewegt.

10. Endstück (14) nach Anspruch 9, wobei der mittlere Bereich (100) eine zweite geneigte Oberfläche (108) mit einem Winkel ungleich Null in Bezug auf eine Ebene senkrecht zu der Mittelachse (A-A') aufweist, wobei die zweite geneigte Fläche (108) entlang der Mittelachse (A-A') gegenüber der ersten geneigten Fläche (106) angeordnet ist, der zweite Umfangsbereich (104) eine komplementäre zweite geneigte Fläche (120) aufweist, die an die zweite geneigte Fläche (108) angesetzt ist, wobei der mittlere Bereich (100) vorteilhafterweise einen trapezförmigen Querschnitt aufweist.

11. Endstück (14) nach einem der Ansprüche 1 bis 7, wobei der erste Umfangsbereich (102) und der zweite Umfangsbereich (104) jeweils ein kontinuierliches oder diskontinuierliches ringförmiges Element (180) aufweisen, das in das Material eingebettet ist, das den mittleren Bereich (100) bildet.

12. Endstück (14) nach einem der vorherigen Ansprüche, wobei der Endbereich der Hülle (20; 30; 150) entweder ein Endbereich eines Druckmantels (20) der flexiblen Leitung (10) ist, der einen inneren Fluidzirkulationsdurchgang definiert, oder ein Endbereich eines Außenmantels (30) der flexiblen Leitung (10) ist, der eine Außenfläche der Leitung (10) definiert, oder/und ein Endbereich eines Zwischenmantels (150) ist, der in einem ringförmigen Raum zwischen dem Druckmantel (20) und dem Außenmantel (30) angeordnet ist.

13. Flexible Leitung (10), umfassend einen mittleren Abschnitt (12), der mindestens einen Polymermantel (20; 30; 150) und Bewehrungselemente (29) aufweist, die um oder in dem Polymermantel (20; 30; 150) angeordnet sind, die flexible Leitung (10) umfassend mindestens ein Endstück (14) nach einem der vorherigen Ansprüche, das an einem Ende des Mittelabschnitts (12) montiert ist.

14. Verfahren zum Montieren eines Endstücks (14) einer flexiblen Leitung (10), dass die folgenden Schritte aufweist:
- Bereitstellen eines Endbereichs eines Polymermantels (20; 30; 150) der flexiblen Leitung (10) und von Endabschnitten von Bewehrungselementen (29) der flexiblen Leitung (10), die um den oder in dem Endbereich der Polymerhülle (20; 30; 150) angeordnet sind;
- Anbringen einer Endwölbung (50), die eine mittlere Fluidzirkulationsbohrung entlang einer mittleren Achse (A-A') definiert, und einer Haube (51), die zusammen mit der Endwölbung (50) eine Kammer (52) zum Aufnehmen der Endabschnitte der Bewehrungselemente (29) definiert;
- Montieren mindestens einer Dichtungsanordnung (54; 56; 153), umfassend mindestens einen Klemmring (76; 130; 158), umfassend mindestens eine Ausbuchtung (84, 160, 162), die radial in die Polymerhülle (20; 30; 150) eingesetzt ist;
- Platzieren einer ringförmigen Dichtung (81) in Kontakt mit der Polymerhülle (20; 30; 150) beabstandet von dem Klemmring (76; 130; 158);
**dadurch gekennzeichnet, dass** die ringförmige Dichtung (81) einen ringförmigen mittleren Bereich (100) aufweist, der radial zu der Polymerhülle (20; 30; 150) hin verformbar ist, zwei versteifte ringförmige Umfangsbereiche (102, 104) aufweist, die steifer als der mittlere Bereich (100) sind und sich axial auf beiden Seiten des mittleren Bereichs (100) befinden, das Verfahren umfassend ein Bewegen der ringförmigen Umfangsbereiche (102, 104) aufeinander zu, um eine radiale Verformung des mittleren Bereichs (100) zu der Polymerhülle (20; 30; 150) hin von einer Ruhekonfiguration in eine aktive Dichtungskonfiguration um die Polymerhülle (20; 30; 150) zu aktivieren.

15. Verfahren nach Anspruch 14, wobei das Endstück (14) eine Aufnahme (82) zum Aufnehmen der ringförmigen Dichtung (81) definiert, wobei die Aufnahme (82) durch eine Aktivierungsquerschnittsfläche (90) der ringförmigen Dichtung (81) begrenzt ist, die sich an der Endwölbung (50) oder an einem Teil befindet, das in Bezug auf die Endwölbung (50) fixiert ist, sich die Aktivierungsquerschnittsfläche (90) in Bezug auf den ersten Umfangsbereich (102) erstreckt, wobei die Aufnahme auch durch eine transversale Druckfläche (92) der ringförmigen Dichtung (81), die sich gegenüber der transversalen Aktivierungsfläche (90) befindet, auf ein zusätzliches Stück zum Aktivieren der Kompression der ringförmigen Dichtung (81), das sich gegenüber dem zweiten Umfangsbereich (104) erstreckt, begrenzt ist, das Bewegen der ringförmigen Umfangsbereiche (102, 104) aufeinander zu die relative Bewegung der Aktivierungsquerschnittsfläche (90) und der transversalen Druckfläche (92) in Bezug aufeinander umfasst, um die ringförmige Dichtung (81) von ihrer Ruhekonfiguration in ihre aktive Konfiguration zu überführen, das Verfahren optional umfassend das Übertragen eines externen Drucks auf die flexible Leitung (10) bis zu einem Spalt zwischen der Aktivierungsquerschnittsfläche (90) und dem ersten Umfangsbereich (102), um den ersten Umfangsbereich (102) weiter an den zweiten Umfangsbereich (104) anzunähern.

## Claims

1. An end-fitting (14) of a flexible pipe (10) for transporting a fluid, comprising:
- at least one end region of a polymer sheath (20; 30; 150) of the flexible pipe (10);
- end sections of armor elements (29) of the flexible pipe (10) arranged around or in the end region of the polymer sheath (20; 30; 150);
- an end vault (50) defining a central bore for letting the fluid flow, extending along a central axis (A-A');
- a cover (51) defining, along with the end vault (50), a chamber (52) for receiving the end sections of armor elements (29);
- an annular seal (81), arranged in contact with the polymer sheath (20; 30; 150) away from the crimping ring (76; 130; 158); the annular seal (81) including a central annular region (100) deformable radially toward the polymer sheath (20; 30; 150), **characterized in that** the annular seal (81) includes two stiffened annular peripheral regions (102, 104), more rigid than the central region (100), located on either side of the central region (100) along the central axis (A-A'), the peripheral annular regions (102, 104) being movable toward each other to activate the radial deformation of the central region (100) toward the polymer sheath (20; 30; 150) from a rest configuration to an active sealing configuration around the polymer sheath (20; 30; 150); the end-fitting comprising at least one sealing assembly (54; 56; 153) comprising at least one crimping ring (76; 130; 158), the crimping ring (76; 130; 158) comprising at least one bulge (84, 160, 162) radially inserted into the polymer sheath (20; 30; 150).

2. The end-fitting (14) according to claim 1, wherein at least in the active position, the central region (100) defines a radial tip (112) protruding toward the polymer sheath (20; 30; 150) beyond each peripheral annular region (102, 104).

3. The end-fitting (14) according to claim 2, wherein in the rest configuration, the central region (100) has the radial tip (112).

4. The end-fitting (14) according to one of the preceding claims, wherein the central region (100) is made of elastomer, in particular of a fluoroelastomer such as FKM, FFKM or FVMQ, or of a nitrile elastomer such as NBR or HNBR, each peripheral region (102, 104) being made of metal, or of a polymer that is more rigid than the elastomer, in particular based on PEK, PEEK, PEEKK, PEKK, PEKEKK, or containing a fluoropolymer, such as polyethylene tetrafluoride (PTFE).

5. The end-fitting (14) according to any of the preceding claims, defining a housing (82) for receiving the annular seal (81), the housing (82) being delimited by a transverse activation surface (90) of the annular seal (81), located on the end vault (50) or on a part fastened with respect to the end vault (50), the transverse activation surface (90) extending opposite the first peripheral region (102), the housing (82) being also delimited by a transverse push surface (92) of the annular seal (81), located opposite the transverse activation surface (90), on an additional compression activation part of the annular seal (81), the transverse push surface (92) extending opposite the second peripheral region (102), the transverse activation surface (90) and the transverse push surface (92) being movable relative to each other at least during the fitting of the-end-fitting (14) so as to switch the annular seal (81) from the rest configuration thereof to the active configuration thereof.

6. The end-fitting (14) according to claim 5, wherein the additional part is fastened onto the crimping ring (76; 130; 158).

7. The end-fitting (14) according to claim 5 or 6, defining a channel (94) for transmitting an external pressure to the flexible pipe (10), opening out into the housing (82) between the transverse activation surface (90) and the first peripheral region (102).

8. The end-fitting (14) according to any of the preceding claims, wherein the first peripheral region (102) and/or the second peripheral region (104) are mounted on surfaces (106, 108) of the central region (100).

9. The end-fitting (14) according to claim 8, wherein the central region (100) has a first inclined surface (106) at a non-zero angle with respect to a plane perpendicular to the central axis (A-A'), the first peripheral region (102) having a first supplementary inclined surface (116), mounted onto the first inclined surface (106), the inclination of the first inclined surface (106) being directed toward the second peripheral region (104) when moving radially towards the central axis (A-A') on the first inclined surface (106).

10. The end-fitting (14) according to claim 9, wherein the central region (100) has a second inclined surface (108) at a non-zero angle with respect to a plane perpendicular to the central axis (A-A'), the second inclined surface (108) being located opposed to the first inclined surface (106) along the central axis (A-A'), the second peripheral region (104) having a supplementary second inclined surface (120) mounted onto the second inclined surface (108), the central region (100) advantageously having a trapezoidal section.

11. The end-fitting (14) according to any of claims 1 to 7, wherein the first peripheral region (102) and the second peripheral region (104) each have a continuous or discontinuous annular member (180) embedded in the material forming the central region (100).

12. The end-fitting (14) according to any of the preceding claims, wherein the end region of the sheath (20; 30; 150) is an end region of a pressure sheath (20) of the flexible pipe (10) defining an internal passage for letting flow a fluid, an end region of an outer sheath (30) of the flexible pipe (10) defining an outer surface of the flexible pipe (10) and/or an end region of an intermediate sheath (150) located in an annular space between the pressure sheath (20) and the outer sheath (30).

13. A flexible pipe (10), comprising a central section (12) including at least one polymer sheath (20; 30; 150) and armor elements (29) arranged around or inside the polymer sheath (20; 30; 150), the flexible pipe (10) comprising at least one end-fitting (14) according to any of the preceding claims, mounted at one end of the central section (12).

14. A method of assembly of an end-fitting (14) of a flexible pipe (10), including the following steps:
- providing an end region of a polymer sheath (20; 30; 150) of the flexible pipe (10) and end sections of armor elements (29) of the flexible pipe (10) arranged around or in the end region of the polymer sheath (20; 30; 150);
- fitting an end vault (50) defining a central bore for the letting the fluid flow along a central axis (A-A'), and a cover (51) defining, along with the end vault (50), a chamber (52) for receiving the end sections of armor elements (29);
- assembling at least one sealing assembly (54; 56; 153) comprising at least one crimping ring (76; 130; 158) comprising at least one bulge (84, 160, 162) inserted radially into the polymer sheath (20; 30; 150);
- placing an annular seal (81) in contact with the polymer sheath (20; 30; 150) away from the crimping ring (76; 130; 158);
**characterized in that** the annular seal (81) includes a central annular region (100) deformable radially toward the polymer sheath (20; 30; 150), and two stiffened annular peripheral regions (102, 104), more rigid than the central region (100), located axially on opposite sides of the central region (100), the method comprising moving the peripheral annular regions (102, 104) toward each other to activate a radial deformation of the central region (100) toward the polymer sheath (20; 30; 150) from a rest configuration to an active sealing configuration around the polymer sheath (20; 30; 150).

15. The method according to claim 14, wherein the end-fitting (14) defines a housing (82) for receiving the annular seal (81), the housing (82) being delimited by a transverse activation surface (90) of the annular seal (81), located on the end vault (50) or on a part fastened with respect to the end vault (50), the transverse activation surface (90) extending opposite the first peripheral region (102), the housing being also delimited by a transverse push surface (92) of the annular seal (81), located opposite the transverse activation surface (90), on an additional compression activation part of the annular seal (81), extending opposite the second peripheral region (104), the movement of the peripheral annular regions (102, 104) toward each other comprising the relative movement of the activation transverse surface (90) and the push transverse surface (92) relative to each other, so as to switch the annular seal (81) from the rest configuration to the active configuration thereof, the method optionally comprising the transmission of an external pressure to the flexible pipe (10) as far as a gap between the activation transverse surface (90) and the first peripheral region (102) to bring even closer the first peripheral region (102) to the second peripheral region (104).
